# EUROPÄISCHE PATENTSCHRIFT

(11) **EP 3 080 564 B1**
(45) Veröffentlichungstag und Bekanntmachung des Hinweises auf die Patenterteilung: **01.08.2018**
(21) Anmeldenummer: 14799146.7
(22) Anmeldetag: 14.11.2014
(51) Int. Cl.: G01F 23/296

(54) **MODULARES SYSTEM ZUR BESTIMMUNG UND/ODER ÜBERWACHUNG EINER PROZESSGRÖSSE EINES MEDIUMS ODER ZUR BESTIMMUNG UND/ODER ÜBERWACHUNG EINES VORGEGEBENEN FÜLLSTANDS EINES MEDIUMS IN EINEM BEHÄLTER**
MODULAR SYSTEM FOR DETERMINING AND/OR MONITORING A QUANTITY OF A MEDIUM OR FOR DETERMINING AND/OR MONITORING A PREDETERMINED LEVEL OF A MEDIUM IN A CONTAINER
SYSTÈME MODULAIRE DE DÉTERMINATION ET/OU DE SURVEILLANCE D'UNE GRANDEUR D'UN MILIEU OU DE DÉTERMINATION ET/OU DE SURVEILLANCE D'UN NIVEAU DE MILIEU DANS UN RÉCIPIENT

(30) Priorität: 13.12.2013 DE 102013114045
(43) Veröffentlichungstag der Anmeldung: 19.10.2016
(73) Patentinhaber: Endress+Hauser SE+Co. KG, 79689 Maulburg (DE)
(72) Erfinder: DÖTSCH, Michael, 79736 Rickenbach (DE); FERRARO, Franco, 79739 Schwörstadt (DE); WALSER, Philipp, D-79591 Eimeldingen (DE); KRUMBHOLZ, Andreas, 79689 Maulburg (DE); SCHMIDT, Robert, 79650 Schopfheim (DE)
(74) Vertreter: Andres, Angelika Maria
(86) Internationale Anmeldenummer: PCT/EP2014/074611
(87) Internationale Veröffentlichungsnummer: WO 2015/086256

(56) Entgegenhaltungen:
- EP-A1- 0 766 072
- EP-A1- 2 650 668
- WO-A1-03/054492
- WO-A1-2004/057283
- WO-A2-2004/075417
- DE-A1- 2 631 061
- DE-A1-102007 038 022
- US-A- 3 625 058
- US-A- 3 745 384
- US-A- 4 594 891
- US-A- 4 740 726
- US-A1- 2002 167 413

## Beschreibung

Die Erfindung betrifft ein modulares System zur Bestimmung und/oder Überwachung einer Prozessgröße eines Mediums oder zur Bestimmung und/oder Überwachung eines vorgegebenen Füllstands eines Mediums in einem Behälter.

Sensoren zur Bestimmung und Überwachung des Grenzstands von flüssigen Medien und rieselfähigen Feststoffen werden von der Anmelderin unter der Bezeichnung LIQUIPHANT und SOLIPHANT angeboten und vertrieben. Bei den Prozessgrößen, die neben dem Füllstand (Grenzstanddetektion) mit vibronischen Sensoren überwacht werden können, handelt es sich insbesondere um die Prozessgrößen Dichte und die Viskosität. Unter der Bezeichnung LIQUIPHANT Dichte wird von der Anmelderin ein zur Dichtemessung geeigneter Sensor angeboten und vertrieben. Darüber hinaus ist die Anmelderin Inhaberin einer Vielzahl von Schutzrechten, die sich auf vibronische Sensoren zur Grenzstand-, Dichte- und/oder Viskositätsmessung beziehen.

Für den Antrieb von vibronischen Sensoren wird entweder ein piezoelektrischer Bimorphantrieb oder ein piezoelektrischer Stapelantrieb verwendet. Bei einem Bimorphantrieb ist ein scheibenförmiges piezoelektrisches Element kraftschlüssig mit einer Membran, an der die schwingfähige Einheit befestigt ist, verbunden. Das scheibenförmige Element ist in unterschiedlichen Segmenten unterschiedlich polarisiert. Bei einem Stapelantrieb sind z.B. auf einem Bolzen mehrere kraftschlüssig untereinander und mit der schwingfähigen Einheit verbundene piezoelektrische Elemente angeordnet, wobei einige piezoelektrischen Elemente durch ein elektrisches Wechselsignal zu Schwingungen angeregt werden, während die verbleibenden piezoelektrischen Elemente die Schwingungen der schwingfähigen Einheit erfassen und in ein elektrisches Antwort-Wechselsignal umwandeln.

Die schwingfähige Einheit eines vibronischen Messgeräts weist bevorzugt zwei in den Behälter ragende Schwingstäbe auf, die an der dem Medium zugewandten Außenfläche einer Membran befestigt sind. Bekannt geworden sind jedoch auch vibronische Messgeräte mit einem Einstab. Die als Erregereinheit dienenden piezoelektrischen Elemente werden mit einem Wechselspannungssignal beaufschlagt, wodurch die beiden Schwingstäbe der schwingfähigen Einheit zu gegensinnigen Schwingungen quer zur Längsachse des vibronischen Messgeräts angeregt werden. Die Empfangseinheit empfängt die Schwingungen der mechanischen schwingfähigen Einheit und wandelt sie in ein elektrisches Wechselspannungssignal um. Zeigt sich eine Änderungen in den Schwinggrößen, tritt z.B. eine Frequenzänderung der Schwingung der schwingfähigen Einheit auf, so ist dies der Auslöser für eine entsprechende Meldung des vibronischen Füllstandsmessgeräts, die im Falle der Verwendung als Überfüllsicherung lautet: "Schwingfähige Einheit ist in Kontakt mit dem Medium" bzw. "Grenzstand erreicht" oder "schwingfähige Einheit schwingt frei" bzw. "Grenzstand ist nicht erreicht". Zur Dichte- und/oder Viskositätsmessung wird gleichfalls das Antwort-Wechselspannungssignal geeignet ausgewertet.

Vibronische Messgeräte werden von der Anmelderin entweder in einer Kompaktversion oder in Versionen mit einer Rohrverlängerung und/oder einer Temperaturreduziereinheit angeboten und vertrieben. Beispielsweise ist die Kompaktversion so ausgelegt, dass sie bei Temperaturen bis zu z.B. 100°C eingesetzt werden kann. Bei der Kompaktversion ist das Sensormodul - bestehend aus der schwingfähigen Einheit und dem mechanischen bzw. elektromechanischen Teil der Erreger-/Empfangseinheit - über eine mechanische und elektrische/elektronische Schnittstelle unmittelbar mit dem Elektronikmodul - elektrischer/elektronischer Teil der Erreger-/Empfangs-einheit und der Auswerteeinheit - verbunden. Um bei Temperaturen oberhalb von 100°C eine Beeinträchtigung oder Zerstörung der temperatur-empfindlichen Komponenten des Elektronikmoduls zu vermeiden, wird zwischen Sensormodul und das Elektronikmodul eine Temperaturreduzier-einheit angeordnet. Hierbei hängt die Länge der Temperaturreduziereinheit von der am Einsatzort des vibronischen Messgeräts herrschenden Umgebungstemperatur ab. Über eine Rohrverlängerung wird gleichfalls die Distanz zwischen dem Sensormodul und dem Elektronikmodul vergrößert. Darüber hinaus hat die Rohrverlängerung die Aufgabe, die Lage des Schaltpunktes des vibronischen Messgeräts in dem Behälter zu ändern. Damit das vibronische Messgerät unabhängig von seiner Länge in gleicher Anwendung ein vergleichbares Verhalten aufweist, ist es erforderlich, das Elektronikmodul in Abhängigkeit von der Länge des vibronischen Sensors unterschiedlich aufzubauen: Infolge der verlängerten elektrischen Leitungen treten nämlich Koppelkapazitäten auf, die sich den Wechselspannungssignalen überlagern und das Verhalten des vibronischen Messgeräts beeinflussen.

Der Erfindung liegt die Aufgabe zugrunde, ein universell einsetzbares, kostengünstiges vibronisches Messgerät vorzuschlagen.

Die Aufgabe wird gelöst durch ein modulares System zur Bestimmung und/oder Überwachung einer Prozessgröße eines Mediums oder zur Bestimmung und/oder Überwachung eines vorgegebenen Füllstands eines Mediums in einem Behälter gemäß dem unabhängigen Patentanspruch 1.

WO 03/054492 A1 beschreibt ein modulares System für ein vibronisches Messgerät gemäß dem Oberbegriff des unabhängigen Patentanspruchs 1. In Abhängigkeit von der am Einsatzort des vibronischen Messgeräts herrschenden Temperatur und/oder in Abhängigkeit von dem Schaltpunkt des vibronischen Messgeräts sind das Sensormodul und das Elektronikmodul erfindungsgemäß entweder unmittelbar miteinander verbunden (Kompaktversion) oder zwischen dem Sensormodul und dem Elektronikmodul ist ein Kontaktierungsmodul angeordnet (verlängerte Version(en)). Über die Temperaturreduziereinheit wird das Elektronikmodul vom Prozessanschluss und damit vom Prozess weiter abgesetzt. Hierdurch wird eine Temperaturreduktion im Bereich des Elektronikmoduls erreicht. Der Schaltpunkt eines vibronischen Messgeräts liegt im Bereich der Schwingstäbe der schwingfähigen Einheit. Über die Rohrverlängerung kann der Schaltpunkt in der Höhe relativ zum Behälter verschoben werden.

Die Länge des Kontaktierungsmoduls ist von dem mechanischen Aufbau des vibronischen Messgeräts abhängig. So ist erfindungsgemäß zwischen dem Sensormodul und einem Prozessanschluss, über den das Messgerät in einer Behälterwandung montiert ist, eine Rohrverlängerung vorgesehen zwischen dem Prozessanschluss und der Elektronikeinheit ist bei Bedarf eine Temperaturreduziereinheit, insbesondere ein Temperaturreduzierrohr vorgesehen. Bei der Kompaktversion erfolgt die Verbindung zwischen Sensormodul und Elektronikmodul unmittelbar bzw. direkt - also ohne das entsprechend dimensionierte Kontaktierungsmodul und ohne die Rohrverlängerung und/oder das Temperaturreduzierrohr. Da in diesem Fall die Koppelkapazitäten auf den elektrischen Pfaden gering sind, wird erfindungsgemäß lediglich einer der beiden in der Elektronikeinheit vorgesehenen Koppelpfade aktiviert.

Wird hingegen die verlängerte Version des vibronischen Messgeräts mit Rohrverlängerung und/oder Temperaturreduzierrohr und mit entsprechend abgestimmtem Kontaktierungsmodul verwendet, so werden die beiden Koppelpfade in der Elektronikeinheit aktiviert, um die auf den elektrischen Pfaden auftretenden Koppelkapazitäten zu eliminieren.

Der Vorteil der erfindungsgemäßen Lösung ist darin zu sehen, dass keine zusätzlichen Elektronikvarianten und/oder keine zusätzlichen Sensormodulvarianten benötigt werden. Das Sensormodul und das Elektronikmodul sind stets gleich ausgestaltet, unabhängig davon, ob ein Kontaktierungsmodul verwendet wird und welche Dimensionierung das Kontaktierungsmodul hat. Fertigungstechnisch ist dies natürlich ein herausragender Vorteil gegenüber den bislang bekannten Lösungen, bei denen zumindest das Elektronikmodul in Abhängigkeit von der Distanz zwischen Sensormodul und Elektronikmodul verändert werden musste.

Weiterhin ist das modulare Konzept erfindungsgemäß so ausgelegt, dass die einzelnen Module in einfacher Weise durch Zusammenstecken miteinander verbunden werden können. Hierdurch wird die Endmontage erheblich vereinfacht. Darüber hinaus sind die beiden Schnittstellen in den Endbereichen des Kontaktierungsmoduls unterschiedlich ausgestaltet, wodurch eine fehlerhafte Montage der einzelnen Module ausgeschlossen wird. Auch sind die Schnittstellen konstruktiv derart ausgestaltet, dass die relativen Höhenpositionen der einzelnen Module bei der Montage genau definiert sind.

Weiterhin sind die Kontaktbuchsen bevorzugt als Federkontakte ausgestaltet, während die Kontaktstifte selbst starr ausgestaltet sind. Durch die federnde, kraftschlüssige Verbindung von Federkontakten und Kontaktstiften wird erreicht, dass keine zusätzlichen mechanischen Belastungen auf die Verbindungsbereiche übertragen werden. Insbesondere können sich die starren Kontaktstifte frei zwischen den Federkontakten ausrichten. Man redet in diesem Zusammenhang auch von einer schwimmenden Lagerung der Kontaktstifte. Da die Kontaktstifte starr ausgebildet sind, werden unerwünschte parasitäre Effekte vermieden. Störende parasitäre Effekte treten insbesondere bei flexiblen Verbindungsleitungen auf, da parasitäre Effekte generell von der Lage der Verbindungsleitungen abhängig sind.

Um die Anforderungen an die Temperaturbeständigkeit zu erfüllen, besteht das Kontaktierungsmodul aus einem Kunststoff, der für die am Einsatzort maximal herrschende Temperatur ausgelegt ist. Die Federkontakte und die Kontaktstifte sind aus einem temperaturbeständigen Metall gefertigt. In den Verbindungsbereichen sind sie bevorzugt vergoldet.

Im Falle einer Demontage ist es wichtig, dass das komplette Kontaktierungsmodul aus dem rohrförmigen Gehäuse des vibronischen Messgeräts herausgezogen werden kann. Daher ist das Kontaktierungsmodul in einer vorteilhaften Weiterbildung so ausgestaltet, dass die dem frei zugänglichen Endbereich des Kontaktierungsmoduls näher liegende Schnittstelle eine größere Steckkraft aufweist als die Schnittstelle, die sich lösen soll und die am entgegengesetzten Endbereich des Kontaktierungsmoduls vorgesehen ist.

Gemäß einer vorteilhaften Ausgestaltung des erfindungsgemäßen Systems ist das Elektronikmodul so ausgestaltet, dass Koppelkapazitäten, die bei Verwendung eines Kontaktierungsmoduls aufgrund der verlängerten elektrischen Pfade auftreten, zumindest näherungsweise kompensiert werden. Da bei den verlängerten Versionen des vibronischen Messgeräts auftretende Koppelkapazitäten erfindungsgemäß zumindest weitgehend eliminiert werden, ist das Verhalten des vibronischen Messgeräts - unabhängig von dessen Länge - in identischen Anwendungen zumindest näherungsweise gleich.

Gemäß einer vorteilhaften Weiterbildung des erfindungsgemäßen Systems wird vorgeschlagen, zur Verbindung von Sensormodul und Elektronikmodul oder zur Verbindung von Sensormodul und Kontaktierungsmodul und Kontaktierungsmodul und Elektronikmodul jeweils zumindest vier Kontaktstifte und zumindest vier korrespondierende Kontaktbuchsen vorzusehen. Insbesondere sind sechs oder mehr Kontaktstifte und Kontaktbuchsen vorteilhaft, wobei jeweils mindestens zwei Kontaktstifte und Kontaktbuchsen einen Massepfad bilden, während die verbleibenden Kontaktstifte und Kontaktbuchsen zwei elektrische Pfade bilden.

Im Falle der Verwendung als Kompaktversion - also im Falle der unmittelbaren Verbindung von Sensormodul und Elektronikmodul - sind die Kontaktstifte und Kontaktbuchsen von Sensormodul und Elektronikmodul so ausgelegt, dass einer der beiden Koppelpfade auf Masse gelegt und daher deaktiviert ist.

Hingegen sind die Kontaktstifte und Kontaktbuchsen zur Verbindung von Sensormodul und Kontaktierungsmodul bzw. zur Verbindung von Kontaktierungsmodul und Elektronikmodul im Falle der Verwendung der Version mit Rohrverlängerung so ausgelegt, dass die beiden elektrischen Koppelpfade aktiviert sind.

Gemäß einer vorteilhaften Ausgestaltung des erfindungsgemäßen Systems wird vorgeschlagen, als Erreger-/Empfangseinheit ein scheibenförmiges piezoelektrisches Element mit vier Segmenten gleicher Dimension zu verwenden, wobei zwei Segmente eine Polarisierung, z.B. +, und zwei Segmente eine entgegengesetzte Polarisierung, z.B. -, aufweisen. Es handelt sich somit um einen Bimorphantrieb mit vier Segmenten. Geeignete Bimorphantriebe sind in der EP 1 281 051 B1 und der EP 1 759 175 A2 ausführlich beschrieben.

Darüber hinaus wird in einer Ausgestaltung des zuvor beschriebenen Bimorphantrieb angeregt, dass jeweils ein Koppelpfad die polarisierten Segmente und ein Koppelpfad die entgegengesetzt polarisierten Segmente miteinander verbindet bzw. koppelt.

Als besonders vorteilhaft wird es in Zusammenhang mit der erfindungsgemäßen Lösung angesehen, wenn in die elektrischen Koppelpfade Kondensatoren geschaltet sind, die so ausgelegt sind, dass sie die in den verlängerten elektrischen Pfaden auftretenden Koppelkapazitäten zumindest teilweise, bevorzugt jedoch in Gänze kompensieren. Bevorzugt sind die Kondensatoren in dem Elektronikmodul angeordnet.

Wie bereits zuvor gesagt, ist es besonders vorteilhaft, wenn das Sensormodul und das Elektronikmodul bei der unmittelbaren Verbindung von Sensormodul und Elektronikmodul und bei der Verwendung eines Kontaktierungsmoduls identisch ausgestaltet sind. Liegt eine derartige Ausgestaltung vor, so ist die Variantenvielfalt minimal. Das erfindungsgemäße System bzw. der erfindungsgemäße Bausatz erlaubt daher eine sehr kostengünstige Fertigung von vibronischen Messgeräten in unterschiedlichsten Anwendungen.

Die Erfindung wird anhand der nachfolgenden Figuren näher erläutert. Es zeigt:
Fig. 1: ein Blockschaltbild, das das erfindungsgemäße System in der Kompaktversion zeigt,
Fig. 2: ein Blockschaltbild, das das erfindungsgemäße System als verlängerte Version zeigt,
Fig. 3: eine Draufsicht auf ein piezoelektrisches Element, das bei einem Bimorphantrieb eingesetzt wird,
Fig. 4a: einen Längsschnitt durch eine erste kurze Variante des Kontaktierungsmoduls,
Fig. 4b: eine perspektivische Ansicht der dem Elektronikmodul zugewandten Schnittstelle des in Fig. 4a gezeigten Kontaktierungsmoduls,
Fig. 4c: eine perspektivische Ansicht der dem Sensormodul zugewandten Schnittstelle des in Fig. 4a gezeigten Kontaktierungsmoduls,
Fig. 5: einen Längsschnitt durch eine verlängerte Variante des Kontaktierungsmoduls,
Fig. 6: eine Explosionsdarstellung des vibronischen Messgeräts in der Kompaktversion,
Fig. 7: eine Explosionsdarstellung des vibronischen Messgeräts in einer verlängerten Version und
Fig. 8: eine Darstellung einer bevorzugten Ausführungsform des erfindungsgemäßen Systems mit fünf unterschiedlichen Versionen.

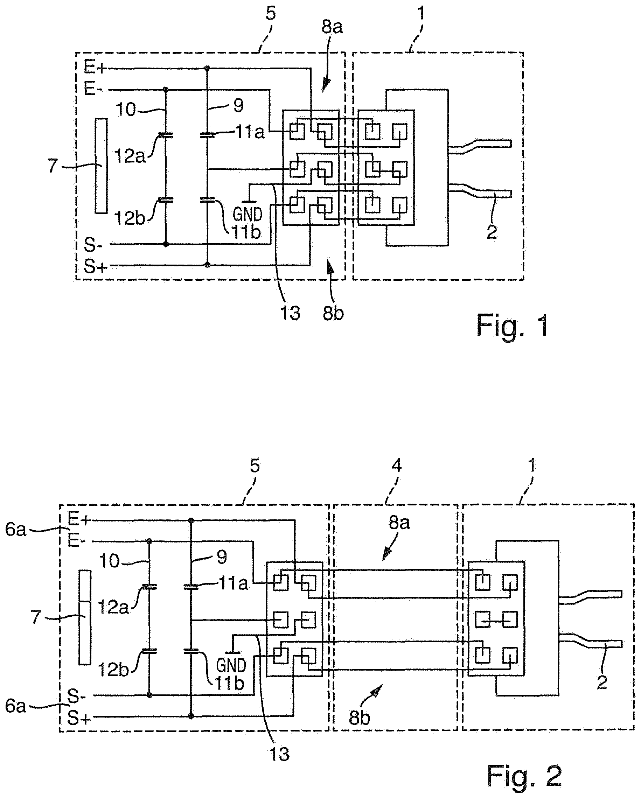

Fig. 1 zeigt ein Blockschaltbild einer vorteilhaften Ausgestaltung, die bei dem erfindungsgemäßen System in der Ausgestaltung als Kompaktversion verwendet wird. Bei der Kompaktversion sind das Sensormodul 1 und das Elektronikmodul 5 unmittelbar miteinander verbunden. Die beiden Koppelpfade 9, 10 sind dem Elektronikmodul 5 zugeordnet. In jedem Koppelpfad 9, 10 sind zwei Kondensatoren 11a, 11b, 12a, 12b in Reihe geschaltet. Bei der Kompaktversion ist nur einer der beiden Koppelpfade 9, 10 - hier der Koppelpfad 10 - aktiviert. Der Koppelpfad 9 liegt auf Masse GND und ist somit deaktiviert.

In Fig. 2 ist ein Blockschaltbild einer vorteilhaften Ausgestaltung dargestellt, die das erfindungsgemäße System in einer der verlängerten Versionen zeigt, wenn zwischen dem Sensormodul 1 und dem Elektronikmodul 5 ein Kontaktierungsmodul 4 verwendet wird. Bei den verlängerten Versionen sind beide Koppelpfade 9, 10 aktiviert.

Bei der verlängerten Version sind das Sensormodul 1 und das Elektronikmodul 5 mittelbar über zwei infolge des Kontaktierungsmoduls 4 verlängerte elektrische Pfade 8a, 8b miteinander verbunden. Der mittlere Pfad ist der Massepfad 13.

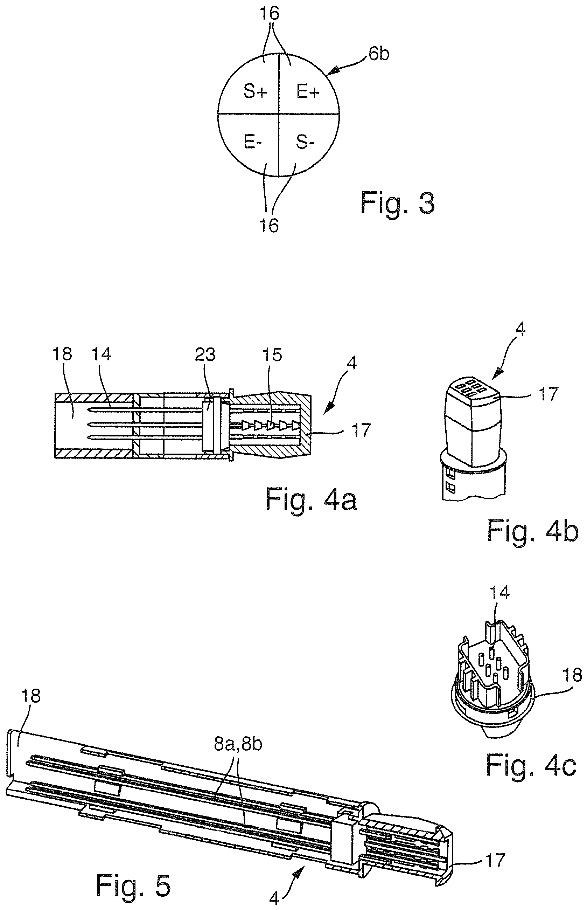

Anhand der Figuren Fig. 4, Fig. 5 und Fig. 8 ist ersichtlich, dass die dem Sensormodul 1 zugewandte Schnittstelle 18 des Kontaktierungsmoduls 4 analog ausgestaltet ist wie die Schnittstelle des Elektronikmoduls 5, und die dem Elektronikmodul 5 zugewandte Schnittstelle 17 ist identisch ausgestaltet wie die Schnittstelle des Sensormoduls 1. Durch einfaches Zusammenstecken der Module 1, 5 bzw. 1, 4, 5 lässt sich je nach Bedarf die Kompaktversion oder die verlängerte Version des vibronischen Messgeräts aus den Einzelkomponenten bilden.

Ab einer definierten Länge der verlängerten Versionen des vibronischen Messgeräts sind beide Koppelpfade 9, 10 aktiviert, um auf den verlängerten Pfaden 8a, 8b auftretende Koppelkapazitäten zu beseitigen. Während bei der Kompaktversion und ggf. bei Verwendung einer kurzen Version des Kontaktierungsmoduls 4 drei elektrische Pfade 8a, 8b, 13 mit sechs Kontaktierungen 14, 15 vorgesehen sind, weist die verlängerte Version nur zwei elektrische verlängerte Pfade 8a, 8b auf. Die in den Koppelpfaden 9, 10 befindlichen Kondensatoren 11a, 11b, 12a, 12b sind so gewählt, dass Koppelkapazitäten, die aufgrund der verlängerten elektrischen Pfade 8a, 8b auftreten, zumindest näherungsweise kompensiert werden.

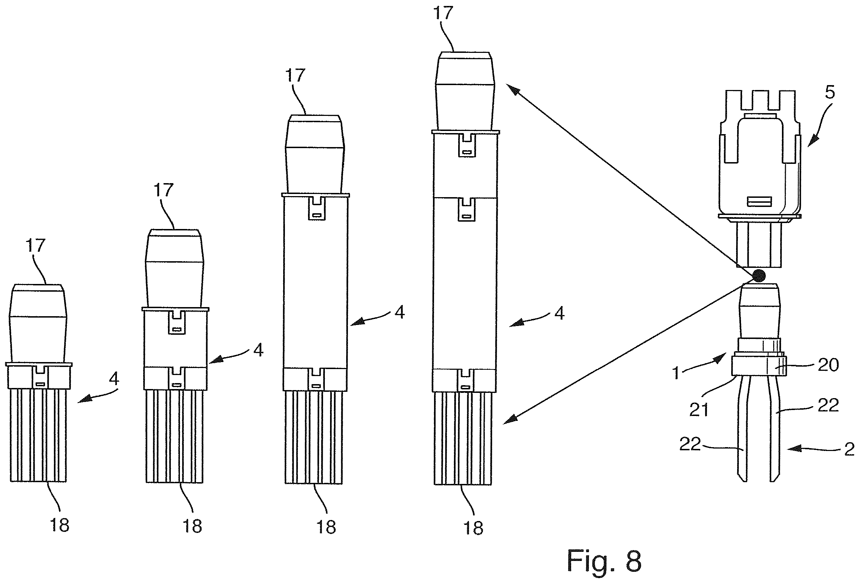

Das Sensormodul 1 und das Elektronikmodul 5 sind bei allen Versionen des vibronischen Messgeräts (sh. insbesondere Fig. 8) gleich ausgestaltet. Damit dies möglich ist, wird in Abhängigkeit von der Verwendung und den Bedingungen am Einsatzort des Messgeräts ein Kontaktierungsmodul 4 der geeigneten Länge gewählt. Die Länge des Kontaktierungsmoduls 4 ist abhängig davon, ob eine Rohrverlängerung 24 und/oder ein Temperaturreduzierrohr 3b verwendet werden/wird. Da durch Verwendung der Rohrverlängerung 24 und/oder der Temperaturreduziereinheit 3b der Abstand des Elektronikmoduls 5 zum Prozess verändert wird, kann das vibronische Messgerät auch in Hochtemperatur-Anwendungen zum Einsatz kommen. Über die Rohrverlängerung 24 lässt sich darüber hinaus der Schaltpunkt des vibronischen Messgeräts verschieben.

Das Sensormodul 1 selbst besteht aus einem rohrförmigen Halsbereich 20, der in einem Endbereich von einer Membran 21 verschlossen ist. An der Membran 21 ist die schwingfähige Einheit 2 befestigt, die im gezeigten Fall aus zwei Schwingstäben 22 besteht. Es versteht sich von selbst, dass anstelle der Schwinggabel auch ein Einstab eingesetzt werden kann.

Während des Betriebs ist das Messgerät über den Prozessanschluss 19 derart an dem Behälter angeordnet, dass die schwingfähige Einheit 2 bis zu einer definierten Eintauchtiefe in das Medium eintaucht und Messwerte hinsichtlich der Dichte oder der Viskosität des Mediums ermittelt, oder dass die schwingfähige Einheit 2 auf der Höhe des vorgegebenen Füllstandes angebracht ist und zumindest temporär mit dem Medium in Kontakt kommt. Wie bereits erwähnt, kann über die Rohrverlängerung 24 der Schaltpunkt des vibronischen Messgeräts variiert werden.

Die schwingfähige Einheit 2 wird über eine Erreger-/Empfangseinheit 6a, 6b und ein Wechselspannungssignal, das von der Regel-/Auswerteeinheit 7 zur Verfügung gestellt wird, zu Schwingungen anregt. Die Antwort-Schwingung wird von zumindest einem piezoelektrischen Element 6b zur Verfügung gestellt, und das entsprechende Antwortsignal wird von der Regel-/Auswerteeinheit 7 ausgewertet. Anhand von zumindest einer Schwinggröße der Schwingung oder anhand einer Änderung einer Schwinggröße der Schwingung wird Information über die Prozessgröße oder das Erreichen des vorbestimmten Füllstandes zur Verfügung stellt

In Fig. 3 ist eine bevorzugte Ausgestaltung einer Erreger-/Empfangseinheit dargestellt. Bei der Erreger-/Empfangseinheit handelt es sich um ein scheibenförmiges piezoelektrisches Element 6b, das vier Segmente 16 aufweist. Zwei Segmente 16 haben eine Polarisierung (+), und zwei Segmente 16 haben eine entgegengesetzte Polarisierung (-). Das Sendesignal S-, S+ wird - wie in Fig. 3 dargestellt - an zwei Segmente 16 des piezoelektrischen Elements 6b angelegt. Das Empfangssignal E-, E+ wird an den beiden verbleibenden Segmenten abgegriffen. Ein entsprechender Antrieb wird von der Anmelderin bereits in Produkten genutzt und ist unter der Bezeichnung Bimorphantrieb bekannt geworden. Bekannte Ausgestaltungen von Bimorphantrieben sind in der EP 1 281 051 B1 und der EP 1 759 175 A2 beschrieben. Selbstverständlich ist die erfindungsgemäße Lösung nicht auf die in Fig. 3 gezeigte Segmentierung des piezoelektrischen Elements 6b beschränkt.

Zur Verbindung des Kontaktierungsmoduls 4 mit dem Sensormodul 1 und dem Elektronikmodul 5 sind bei der gezeigten Ausgestaltung der erfindungsgemäßen Vorrichtung jeweils sechs Kontaktstifte 14 und jeweils sechs korrespondierende Kontaktbuchsen 15 vorgesehen. Gut zu sehen ist diese Ausgestaltung auch in den Figuren Fig. 4a, Fig. 4b und Fig. 5. Bei der in Fig. 1 dargestellten Kompaktversion wird das Sensormodul 1 direkt auf das Elektronikmodul 5 gesteckt. Der Mittelpunkt des Kopplungspfades 9 wird über die mittig angeordneten elektrischen Kontakte 14, 15 und über den Kurzschluss auf dem Sensormodul 1 auf Masse gelegt. Somit ist bei der Kompaktversion einer der beiden Koppelpfade - hier der Koppelpfad 9 - nicht aktiv.

Im Falle der unmittelbaren Verbindung von Sensormodul 1 und Elektronikmodul 5 sind die Kontaktstifte 14 und Kontaktbuchsen 15 von Sensormodul 1 und Elektronikmodul 5 folglich so ausgelegt, dass einer der beiden Koppelpfade 9, 10 auf Masse gelegt und deaktiviert ist.

Im Falle der Verwendung eines entsprechend langen Kontaktierungsmoduls 4 sind die Kontaktstifte 14 und die Kontaktbuchsen 15 zur Verbindung von Sensormodul 1 und Kontaktierungsmodul 4 bzw. zur Verbindung von Kontaktierungsmodul 4 und Elektronikmodul 5 so ausgelegt, dass beide elektrische Koppelpfade 9, 10 aktiviert sind. Hierbei koppelt ein Koppelpfad 9 die polarisierten Segmente 16+ und ein Koppelpfad 10 die entgegengesetzt polarisierten Segmente 16- miteinander. In die elektrischen Koppelpfade 9, 10 sind Kondensatoren 11a, 11b, 12a, 12b geschaltet, die so ausgelegt sind, dass sie die in den verlängerten elektrischen Pfaden 8a, 8b auftretenden Koppelkapazitäten zumindest teilweise kompensieren. Insbesondere werden die Koppelkapazitäten durch die Schaltung zumindest insoweit eliminiert, dass das vibronische Messgerät ein nahezu identisches Verhalten in näherungsweise gleichen Anwendungen bei allen Versionen des vibronischen Messgerätes zeigt.

Bevorzugt sind die Kondensatoren 11a, 11b, 12a, 12b in dem Elektronikmodul 5 angeordnet. Da das Elektronikmodul 5 und das Sensormodul 1 bei allen Versionen identisch sein sollen, müssen die Kondensatoren 11a, 11b, 12a, 12b so bemessen sein, dass die resultierenden Abweichungen im Verhalten in einem vorgegebenen Toleranzbereich liegen. Selbstverständlich können die Kondensatoren 11a, 11b, 12a, 12b auch auf jede Variante des Kontaktierungsmoduls 4 individuell abgestimmt werden. Erfindungsgemäß ist ab einer bestimmten Länge des Kontaktierungsmoduls 4 der Mittelpunkt eines der beiden Koppelpfade 9, 10 nicht mehr mit Masse verbunden. Entweder sind die beiden mittleren elektrischen Pfade 8c gekürzt, oder sie fehlen. Folglich sind die beiden Koppelpfade 9, 10 aktiviert. Durch diese entgegengesetzte Kopplung können die unerwünschten Koppelkapazitäten, die infolge des Kontaktierungsmoduls 4 auf den verlängerten elektrischen Pfaden 8a, 8b auftreten, kompensiert werden.

In den Figuren Fig. 4a, Fig. 4b und Fig. 4c sind unterschiedliche Ansichten eines kurzen Kontaktierungsmoduls 4 gezeigt, das bei allen Versionen eingesetzt wird. Neben den elektrischen Pfaden 8a, 8b sind auch die Schnittstellen 17, 18 im Detail gezeigt. Fig. 5 zeigt einen Längsschnitt durch ein Kontaktierungsmodul 4, das bei einer der verlängerten Versionen des Messgeräts eingesetzt wird.

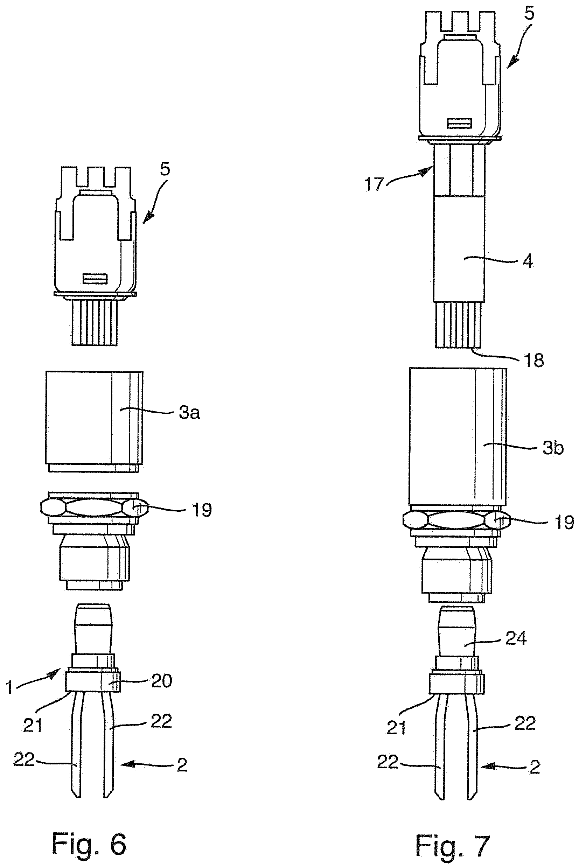

Fig. 6 zeigt eine Explosionsdarstellung einer Ausgestaltung eines vibronischen Messgeräts ohne Kontaktierungsmodul. In Fig. 7 ist eine Explosionsdarstellung einer Ausgestaltung eines vibronischen Messgeräts, bei dem ein Kontaktierungsmodul 4 eingesetzt ist.

Das modulare erfindungsgemäße System, das in Fig. 8 noch einmal verdeutlicht ist, hat eine Vielzahl von Vorteilen:
- Die steckbaren Module 1, 4, 5 ermöglichen ein einfaches Verbauen in der Endmontage
- Eine wertschöpfende auf die jeweiligen Erfordernisse angepasste Produktion kann auch in entfernten Fertigungsstätten erfolgen
- Durch die unterschiedliche Geometrische Ausgestaltung der einzelnen Schnittstellen 17, 18 ist ein fehlerhaftes Zusammenstecken der Module 1, 4, 5 ausgeschlossen
- Bei der in Fig. 4a gezeigten Ausgestaltung sind die elektrischen Kontakte zwischen den Kontaktstiften 14 und den Kontaktbuchsen 15 als Federkontakte ausgestaltet. Insbesondere werden anstelle von Kontaktbuchsen Führungen 15 bzw. Steckhülsen verwendet. Die Führungen bzw. Steckhülsen 15 sind so ausgestaltet, dass sie eine grobe Positionierung der leitenden elektrischen Verbindungen bzw. elektrischen Pfade 8a, 8b gewährleisten, allerdings bleiben die einzelnen elektrischen Federkontakte 14, 15 ohne zusätzliche mechanische Belastungen. Die Kontaktstifte 14 können sich frei zwischen den Federkontakten 15 ausrichten. Man redet in diesem Zusammenhang auch von einer schwimmenden Lagerung der Kontaktelemente 14, 15.
- Die Federkontakte 15 geben eine definierte Lage vor. Infolge der starren Verbindungsleitungen 8a, 8b treten keine parasitären Effekte auf - wie sie z.B. bei flexiblen Verbindungsleitungen je nach Lage entstehen können.
- Durch geeignete Kombination eines Kunststoffes, z.B. PEI, und Metall lässt sich das Kontaktierungsmodul 4 temperaturresistent gestalten.
- Das Kontaktierungsmodul 4 ist weiterhin so ausgelegt, dass es bei einer Demontage als Einzelteil aus dem rohrförmigen Gehäuse des vibronischen Messgeräts herausgezogen werden kann. Hierzu ist insbesondere die Steckkraft im oberen Endbereich des Kontaktierungsmoduls 4 größer als die Steckkraft am entgegengesetzten Endbereich des Kontaktierungsmoduls 4.

In Fig. 8 ist eine bevorzugte Ausgestaltung des erfindungsgemäßen Systems zu sehen. Im rechten Bereich von Fig. 8 ist die Kompaktversion des vibronischen Messgeräts, bestehend aus Sensormodul 1 und Elektronikmodul 5, gezeigt. Die Figuren links von der Kompaktversion zeigen unterschiedliche Ausgestaltungen des Kontaktierungsmoduls 4. Je nachdem ob eine Rohrverlängerung 24 und/oder ein Temperaturreduzierrohr 3b bzw. ein Temperaturreduzierrohr 3a verwendet werden/wird, wird ein entsprechend dimensioniertes Kontaktierungsmodul 4 verwendet. Je nach Ausgestaltung sind die vibronischen Messgeräte bei unterschiedlichen Temperaturen, z.B. bei 100°C oder 150°C einsetzbar.

Die Länge des vibronischen Messgeräts wird durch zwei unabhängige Faktoren bestimmt: 1) die Prozesstemperatur, wobei das kurze Gehäuse für Temperaturen bis 100 °C und das lange Gehäuse für Temperaturen bis 150 °C ausgelegt ist, und 2) die Lage des Schaltpunkts mit oder ohne Rohrverlängerung 24. Entsprechend ergeben sich vier unterschiedliche Längen und entsprechend vier unterschiedlich dimensionierte Kontaktierungsmodule 4.
- Kurzes Gehäuse bis 100 °C ohne Rohrverlängerung 24;
- Langes Gehäuse (also mit Temperaturreduzierrohr 3b) bis 150 °C ohne Rohrverlängerung 24;
- Kurzes Gehäuse bis 100 °C mit Rohrverlängerung 24;
- Langes Gehäuse bis 150 °C mit Rohrverlängerung 24.

### Bezugszeichenliste

- 1: Sensormodul
- 2: schwingfähige Einheit
- 3a: Temperaturreduziereinheit/Temperaturreduzierrohr - kurzes Gehäuse
- 3b: Temperaturreduziereinheit/Temperaturreduzierrohr - langes Gehäuse
- 4: Kontaktierungsmodul
- 5: Elektronikmodul
- 6a: Erreger-/Empfangseinheit (elektrisch)
- 6b: Erreger-/Empfangseinheit (piezoelektrisches Element)
- 7: Auswerteeinheit
- 8a: elektrischer Pfad
- 8b: elektrischer Pfad
- 9: Koppelpfad
- 10: Koppelpfad
- 11a: Kondensator
- 11b: Kondensator
- 12a: Kondensator
- 12b: Kondensator
- 13: Massepfad
- 14: Kontaktstift
- 15: Kontaktbuchse / Führung / Steckhülse
- 16: Segment
- 17: dem Elektronikmodul zugewandte Schnittstelle
- 18: dem Sensormodul zugewandte Schnittstelle
- 19: Prozessanschluss
- 20: rohrförmiger Halsbereich
- 21: Membran
- 22: Schwingstab
- 23: Distanzhalter
- 24: Rohrverlängerung

## Patentansprüche

1. Modulares System für ein vibronisches Messgerät zur Bestimmung und/oder Überwachung einer Prozessgröße eines Mediums oder zur Bestimmung und/oder Überwachung eines vorgegebenen Füllstands eines Mediums in einem Behälter, mit einem Sensormodul (1) mit einer schwingfähigen Einheit (2), das derart in dem Behälter angeordnet ist, dass die schwingfähige Einheit (2) bis zu einer definierten Eintauchtiefe in das Medium eintaucht, oder dass die schwingfähige Einheit (2) auf der Höhe des vorgegebenen Füllstandes angebracht ist,
und mit einem Elektronikmodul (5), bestehend aus einer Erreger-/Empfangseinheit (6),
die die schwingfähige Einheit (2) zu Schwingungen anregt und die Schwingungen der schwingfähigen Einheit empfängt, wobei dem Elektronikmodul zwei elektrische Koppelpfade zugeordnet sind, und mit einer Regel-/Auswerteeinheit (7), die anhand von zumindest einer Schwinggröße der Schwingung oder anhand einer Änderungen einer Schwinggröße der Schwingung Information über die Prozessgröße oder das Erreichen des vorbestimmten Füllstandes zur Verfügung stellt,
wobei die einzelnen Module (1, 5; 1, 4, 5) durch Zusammenstecken miteinander verbunden werden können,
**dadurch gekennzeichnet dass**
das Sensormodul (1) und das Elektronikmodul (5) entweder elektrisch unmittelbar miteinander verbunden sind und einer der beiden elektrischen Koppelpfade (9; 10) aktiviert ist und der andere der beiden elektrischen Koppelpfade (9;10) deaktiviert ist oder wobei das Sensormodul (1) und das Elektronikmodul (5) über ein Kontaktierungsmodul (4) und infolge des Kontaktierungsmoduls (4) über verlängerte elektrische Pfade (8a, 8b) miteinander verbunden sind und wobei die beiden elektrischen Koppelpfade (9, 10) aktiviert sind,
wobei das Kontaktierungsmodul (4) in Abhängigkeit von der am Einsatzort des vibronischen Messgeräts herrschenden Temperatur und/oder in Abhängigkeit von dem Schaltpunkt des vibronischen Messgeräts in Verbindung mit einer Rohrverlängerung (24) und/oder einem Temperaturreduzierrohr (3b) einer definierten Länge eingesetzt wird, und wobei das Sensormodul (1) und das Elektronikmodul (5) im Falle der unmittelbaren elektrischen Verbindung von Sensormodul (1) und Elektronikmodul (5) und im Falle der Verbindung von Sensormodul (1) und Elektronikmodul (5) über das Kontaktierungsmodul (4) identisch ausgestaltet sind, wobei im Falle der Verbindung von Sensormodul (1) und Elektronikmodul (5) über das Kontaktierungsmodul (4) die dem Sensormodul (1) zugewandte Schnittstelle des Kontaktierungsmoduls (4) analog ausgestaltet ist wie die Schnittstelle des Elektronikmoduls (5), und die dem Elektronikmodul (5) zugewandte Schnittstelle des Kontaktierungsmoduls (4) identisch ausgestaltet ist wie die Schnittstelle des Sensormoduls (1).

2. Modulares System nach Anspruch 1,
wobei die elektrischen Koppelpfade (9, 10) so ausgestaltet sind, dass Koppelkapazitäten auf den verlängerten elektrischen Pfaden (8a, 8b) zumindest näherungsweise kompensiert werden,
mittels in dem Elektronikmodul (5) angeordneter Kondensatoren (11a, 11b, 12a, 12b), die in die elektrischen Koppelpfade (9, 10) geschaltet und so ausgelegt sind, dass sie die in den verlängerten elektrischen Pfaden (8a, 8b) auftretenden Koppelkapazitäten zumindest teilweise kompensieren.

3. Modulares System nach Anspruch 1 oder 2,
wobei zur Verbindung von Sensormodul (1) und Elektronikmodul (5) oder zur Verbindung von Sensormodul (1) und Kontaktierungsmodul (4) und Kontaktierungsmodul (4) und Elektronikmodul (5) jeweils zumindest vier Kontaktstifte (14) und zumindest vier korrespondierende Kontaktbuchsen (15) vorgesehen sind.

4. Modulares System nach einem der Ansprüche 1-3,
wobei sechs oder mehr Kontaktstifte (14) und Kontaktbuchsen (15) vorgesehen sind, wobei jeweils mindestens zwei Kontaktstifte (14) und Kontaktbuchsen (15) einen Massepfad (13) bilden.

5. Modulares System nach zumindest einem der Ansprüche 1-4,
wobei im Falle der Verbindung von Sensormodul (1) und Elektronikmodul (5) die Kontaktstifte (14) und Kontaktbuchsen (15) von Sensormodul (1) und Elektronikmodul (5) so ausgelegt sind, dass einer der beiden elektrischen Koppelpfade (9, 10) auf Masse gelegt und dadurch deaktiviert ist.

6. Modulares System nach zumindest einem der Ansprüche 1-4,
wobei im Falle der Verwendung einer Rohrverlängerung (3) und/oder eines Temperaturreduzierrohrs (3b) mit entsprechend dimensioniertem Kontaktierungsmoduls (4) die Kontaktstifte (14) und Kontaktbuchsen (15) zur Verbindung von Sensormodul (1) und Kontaktierungsmodul (4) bzw. zur Verbindung von Kontaktierungsmodul (4) und Elektronikmodul (5) so ausgelegt sind, dass die beiden elektrischen Koppelpfade (9, 10) aktiviert sind.

7. Modulares System nach zumindest einem der vorhergehenden Ansprüche,
wobei das Sensormodul (1), das Kontaktierungsmodul (4) und das Elektronikmodul (5) so ausgelegt sind, dass die einzelnen Module (1, 4, 5) über Steckverbindungen miteinander verbindbar sind.

8. Modulares System nach Anspruch 7,
wobei die Schnittstellen (17,18) in den Endbereichen des Kontaktierungsmoduls (4) unterschiedlich ausgestaltet sind.

9. Modulares System nach einem oder mehreren der vorhergehenden Ansprüche, wobei die Kontaktbuchsen (15) als Federkontakte ausgestaltet und wobei die Kontaktstifte (14) starr ausgebildet sind.

10. Modulares System nach zumindest einem der Ansprüche 1-9,
wobei das Kontaktierungsmodul (4) aus einem Kunststoff gefertigt ist, der zumindest bis zu der am Einsatzort maximal herrschenden Temperatur temperaturbeständig ist, und wobei die Kontaktbuchsen (15) bzw. die Federkontakte und die Kontaktstifte (14) aus einem temperaturbeständigen leitfähigen Metall gefertigt sind.

11. Modulares System nach einem oder mehreren der vorhergehenden Ansprüche, wobei die Schnittstellen (17,18) so ausgestaltet sind, dass die dem frei zugänglichen Endbereich des Kontaktierungsmoduls (4) zugewandte Schnittstelle (17) eine größere Steckkraft aufweist als die Schnittstelle (18), die am entgegengesetzten Endbereich des Kontaktierungsmoduls (4) vorgesehen ist.

12. Modulares System nach einem oder mehreren der vorhergehenden Ansprüche, dass die Erreger-/Empfangseinheit (6) aus einem scheibenförmigen piezoelektrischen Element (6b) mit vier Segmenten (16) besteht, wobei zwei Segmente (16) eine Polarisierung (+) und zwei Segmente (16) eine entgegengesetzte Polarisierung (-) aufweisen.

13. Modulares System nach Anspruch 12,
wobei einer der beiden elektrischen Koppelpfade (9) die polarisierten Segmente (16+) und der andere der beiden elektrischen Koppelpfade (10) die entgegengesetzt polarisierten Segmente (16-) miteinander koppelt.

14. Modulares System nach einem oder mehreren der vorhergehenden Ansprüche, wobei das Temperaturreduzierrohr (3b) zwischen einem Prozessanschluss (19) und dem Elektronikmodul (5) vorgesehen ist.

15. Modulares System nach einem oder mehreren der vorhergehenden Ansprüche, wobei die Rohrverlängerung (24) zwischen dem Sensormodul (1) und dem Prozessanschluss (19) vorgesehen ist.

## Claims

1. Modular system for a vibronic measuring device for determining and/or monitoring a process variable of a medium or for determining and/or monitoring a predefined level of a medium in a vessel,
with a sensor module (1) with a unit which is able to vibrate (2), which is arranged in the vessel in such a way that the unit which is able to vibrate (2) is immersed in the medium as far as a defined immersion depth, or in that the unit which is able to vibrate (2) is fixed at the height of the predefined level,
and with an electronics module (5), consisting of an excitation/reception unit (6), which excites the unit which is able to vibrate (2) to vibrate and receives the vibrations of the unit which is able to vibrate, wherein two electrical coupling paths are assigned to the electronics module, and with a control/evaluation unit (7) which makes information available about the process variable or about the reaching of a predefined level on the basis of at least one vibration variable of the vibration or on the basis of a change in the vibration variable of the vibration, wherein the individual modules (1, 5 ; 1, 4, 5) can be interconnected by being plugged together,
**characterized in that**
the sensor module (1) and the electronics module (5) are either electrically connected with one another directly and one of the two coupling paths (9, 10) is activated and the other of the two electrical coupling paths is deactivated, or wherein the sensor module (1) and the electronics module (5) are interconnected via a contact module (4) and a result of the contact module (4) via extended electrical paths (8a, 8b) and wherein the two electrical coupling paths (9, 10) are activated,
wherein the contact module (4) is used in conjunction with a tube extension (24) and/or a temperature reduction tube (3b) of a defined length depending on the temperature present at the place of deployment and/or depending on the switching point of the vibronic measuring device, and wherein the sensor module (1) and the electronics module (5) are designed identically in the event of the direct electrical connection of the sensor module (1) and the electronics module (5) and in the event that the sensor module (1) and the electronics module (5) are connected via the contact module (4), wherein in the event that the sensor module (1) and the electronics module (5) are connected via the contact module (4), the interface of the contact module (4) facing towards the sensor module (1) is designed in the same way as the interface of the electronics module (5), and the interface of the contact module (4) facing towards the electronics module (5) is designed identically to the interface of the sensor module (1).

2. Modular system as claimed in Claim 1,
wherein the electrical coupling paths (9, 10) are designed in such a way that coupling capacities are at least approximately compensated for on the extended electrical paths (8a, 8b),
by means of capacitors (11a, 11b, 12a, 12b) which are arranged in the electronics module (5) and are included into the electrical coupling paths (8a, 8b) and are designed in such a way that they at least partially compensate for the coupling capacities occurring in the extended electrical paths (8a, 8b).

3. Modular system as claimed in Claim 1 or 2,
wherein at least four contact pins (14) and at least four corresponding contact sockets (15) are provided in each case to connect the sensor module (1) and the electronics module (5) or to connect the sensor module (1) and the contact module (4), and the contact module (4) and the electronics module (5).

4. Modular system as claimed in Claim 1 to 3,
wherein six or more contact pins (14) and contact sockets (15) are provided, wherein, in each case, at least two contact pins (14) and at least two contact sockets (15) form a ground path (13).

5. Modular system as claimed in at least one of the Claims 1 to 4,
wherein, if the sensor module (1) and the electronics module (5) are connected, the contact pins (14) and the contact sockets (15) of the sensor module (1) and of the electronics module (5) are designed in such a way that one of the two electrical coupling paths (9, 10) is connected to ground and is deactivated as a result.

6. Modular system as claimed in at least one of the Claims 1 to 4,
wherein, if a tube extension (3) and/or a temperature reduction tube (3b) is used with a contact module (4) of an appropriate size, the contact pins (14) and the contact sockets (15) designed for connecting the sensor module (1) and the contact module (4) and/or for connecting the contact module (4) and the electronics module (5) are designed in such a way that the two electrical coupling paths (9, 10) are activated.

7. Modular system as claimed in at least one of the previous claims,
wherein the sensor module (1), the contact module (4) and the electronics module (5) are designed in such a way that the individual modules (1, 4, 5) can be interconnected via plug-in connections.

8. Modular system as claimed in Claim 7,
wherein the interfaces (17, 18) are designed differently in the end sections of the contact module (4).

9. Modular system as claimed in one or more of the previous claims, wherein the contact sockets (15) are designed as spring contacts and wherein the contact pins (14) are designed as rigid contacts.

10. Modular system as claimed in at least one of the Claims 1 to 9,
wherein the contact module (4) is made from a plastic material, which is resistant to temperature at least up to the maximum temperature present at the place of deployment, and wherein the contact sockets (15) or the spring contacts and the contact pins (14) are made from a conductive material that is resistant to temperature.

11. Modular system as claimed in one or more of the previous claims, wherein the interfaces (17, 18) are designed in such a way that the interface (17) facing towards the freely accessible end area of the contact module (4) has a larger insertion force than the interface (18) which is provided on the opposite end area of the contact module (4).

12. Modular system as claimed in one or more of the previous claims,
wherein the excitation/reception unit (6) comprises a discoidal piezoelectric element (6b) with four segments (16), wherein two segments (16) have a polarization (+) and two segments (16) have an opposite polarization (-).

13. Modular system as claimed in Claim 12,
wherein one of the two electrical coupling paths (9) couple the polarized segments (16+) and the other of the two electrical coupling paths (10) couple the segments with an opposite polarization (16-).

14. Modular system as claimed in one or more of the previous claims, wherein the temperature reduction tube (3b) is provided between a process connection (19) and the electronics module (5).

15. Modular system as claimed in one or more of the previous claims, wherein the tube extension (24) is provided between the sensor module (1) and the process connection (19).

## Revendications

1. Système modulaire pour un appareil de mesure vibronique destiné à la détermination et/ou la surveillance d'une grandeur process d'un produit, ou destiné à la surveillance d'un niveau prédéfini d'un produit dans un réservoir, avec un module capteur (1) avec une unité apte à vibrer (2), qui est disposé dans le réservoir de telle sorte que l'unité apte à vibrer (2) est immergée dans le produit jusqu'à une profondeur d'immersion définie, ou de telle sorte que l'unité apte à vibrer est disposée à la hauteur du niveau de remplissage prédéfini,
et avec un module électronique (5), constitué d'une unité d'excitation / de réception (6), qui fait entrer en vibrations l'unité apte à vibrer (2) et reçoit les vibrations de l'unité apte à vibrer, deux chemins de couplage électriques étant affectés au module électronique, lesquels chemins mettent à disposition une information sur la grandeur process ou sur l'atteinte de niveau de remplissage prédéfini au moyen d'au moins une grandeur oscillante des vibrations ou au moyen de variations d'une grandeur oscillante des vibrations,
pour lequel les différents modules (1, 5 ; 1, 4, 5) peuvent être reliés entre eux par une connexion enfichable,
**caractérisé**
**en ce que** le module capteur (1) et le module électronique (5) sont reliés entre eux soit électriquement et l'un des deux chemins de couplage électriques (9, 10) est activé et l'autre parmi les deux chemins de couplage électriques (9, 10) est désactivé, soit le module capteur (1) et le module électronique (5) sont reliés entre eux par l'intermédiaire d'un module de contact (4) et à la suite du module de contact (4) via des chemins électriques rallongés (8a, 8b) et pour lequel les deux chemins de couplage électriques (9, 10) sont activés,
pour lequel le module de contact (4) est utilisé en combinaison avec une rallonge de tube (24) et/ou un tube de réduction de température (3b) de longueur définie, en fonction de la température régnant sur le lieu d'utilisation de l'appareil de mesure vibronique et/ou en fonction du point de commutation de l'appareil de mesure vibronique, et pour lequel le module capteur (1) et le module électronique (5), et en cas de liaison du module capteur (1) et du module électronique (5) via le module de contact (4), sont conçus de façon identique, pour lequel en cas de liaison du module capteur (1) et du module électronique (5) via le module de contact (4), l'interface faisant face au module de contact (4) est conçue de façon analogue à l'interface du module électronique (5), et l'interface faisant face au module électronique (5) du module de contact (4) étant conçue de façon identique à l'interface du module capteur (1).

2. Système modulaire selon la revendication 1,
pour lequel les chemins de couplage électriques (9, 10) sont conçus de telle sorte que les capacités de couplage sont compensées au moins approximativement sur les chemins électriques rallongés (8a, 8b),
au moyen de condensateurs (11a, 11b, 12a, 12b) disposés dans le module électronique (5), qui sont insérés dans les chemins de couplage électriques (9, 10) et conçus de telle sorte à compenser au moins partiellement les capacités de couplage générées dans les chemins électriques rallongés (8a, 8b).

3. Système modulaire selon la revendication 1 ou 2,
pour lequel sont prévues, pour la liaison du module capteur (1) et le module électronique (5) ou pour la liaison du module capteur (1) et le module de contact (4), et du module de contact (4) et du module électronique (5), respectivement au moins quatre broches de contact mâles (14) et au moins quatre broches de contact femelles (15) correspondantes.

4. Système modulaire selon l'une des revendications 1 à 3,
pour lequel sont prévues au moins six broches de contact mâles (14) et broches de contact femelles (15), au moins deux broches de contact mâles (14) et broches de contact femelles (15) constituant à chaque fois un trajet de masse (13).

5. Système modulaire selon au moins l'une des revendications 1 à 4,
pour lequel, en cas de liaison du module capteur (1) et du module électronique (5), les broches de contact mâles (14) et les broches de contact femelles (15) du module capteur (1) et du module électronique (5) sont conçues de telle sorte que l'un des deux chemins de couplage électriques (9, 10) est relié à la masse, et par conséquent désactivé.

6. Système modulaire selon au moins l'une des revendications 1 à 4,
pour lequel, en cas d'utilisation d'une rallonge de tube (3) et/ou d'un tube de réduction de température (3b) avec un module de contact dimensionné en conséquence, les broches de contact mâles (14) et les broches de contact femelles (15) destinées à la liaison du module capteur (1) et du module de contact (4), ou à la liaison du module de contact (4) et du module électronique (5), sont conçues de telle sorte que les deux chemins de couplage électriques (9, 10) sont activés.

7. Système modulaire selon au moins l'une des revendications précédentes, pour lequel le module capteur (1) et le module de contact (4) et le module électronique (5) sont conçus de telle sorte que les différents modules (1, 4, 5) puissent être reliés entre eux au moyen de connexions enfichables.

8. Système modulaire selon la revendication 7,
pour lequel les interfaces (17, 18) sont conçues de façon distincte dans les zones d'extrémité du module de contact (4).

9. Système modulaire selon l'une ou plusieurs des revendications précédentes, pour lequel les broches de contact femelles (15) sont conçues en tant que contacts à ressort et pour lequel les broches de contact mâles (14) sont conçues en tant que contacts rigides.

10. Système modulaire selon au moins l'une des revendications 1 à 9,
pour lequel le module de contact (4) est constitué d'une matière plastique, qui résiste au minimum à la température maximale régnant sur le lieu d'utilisation, et pour lequel les broches de contact femelles (15) ou les contacts à ressort et les broches de contact mâles (14) sont constitués d'un métal conducteur résistant à la température.

11. Système modulaire selon l'une ou plusieurs des revendications précédentes, pour lequel les interfaces (17, 18) sont conçues de telle sorte que l'interface (17) faisant face à la zone d'extrémité librement accessible du module de contact (4) présente une force d'enfichage supérieure à l'interface (18), qui est prévue sur la zone d'extrémité opposée du module de contact (4).

12. Système modulaire selon l'une ou plusieurs des revendications précédentes, pour lequel l'unité d'excitation / de réception (6) est constituée d'un élément piézoélectrique discoïde (6b) présentant quatre segments (16), deux segments (16) présentant une polarisation (+) et deux segments (16) une polarisation opposée (-).

13. Système modulaire selon la revendication 12,
pour lequel l'un des deux chemins de couplage électriques (9) couple entre eux les segments polarisés (16+) et l'autre parmi les deux chemins de couplage électriques (10) les segments à polarisation opposée (16-).

14. Système modulaire selon l'une ou plusieurs des revendications précédentes, pour lequel le tube de réduction de température (3b) est prévu entre le raccord process (19) et le module électronique (5).

15. Système modulaire selon l'une ou plusieurs des revendications précédentes, pour lequel la rallonge de tube (24) est prévue entre le module capteur (1) et le raccord process (19).
